Europäisches Patentamt

European Patent Office

Office européen des brevets

(19)

(11) **EP 0 828 964 B1**

(12) **EUROPÄISCHE PATENTSCHRIFT**

(45) Veröffentlichungstag und Bekanntmachung des Hinweises auf die Patenterteilung:
**30.05.2001 Patentblatt 2001/22**

(51) Int Cl.⁷: **F16L 41/08**

(21) Anmeldenummer: **97914222.1**

(22) Anmeldetag: **11.03.1997**

(86) Internationale Anmeldenummer:
**PCT/EP97/01232**

(87) Internationale Veröffentlichungsnummer:
**WO 97/36128 (02.10.1997 Gazette 1997/42)**

(54) **STUTZEN FÜR BETONROHRE**

CONNECTOR FOR CONCRETE PIPES

RACCORD POUR CANALISATIONS EN BETON

(84) Benannte Vertragsstaaten:
**AT BE CH DE DK ES FI FR GB GR IE IT LI LU MC NL PT SE**

(30) Priorität: **25.03.1996 DE 19611682
25.10.1996 DE 19644357
07.02.1997 DE 29702083 U**

(43) Veröffentlichungstag der Anmeldung:
**18.03.1998 Patentblatt 1998/12**

(73) Patentinhaber: **KUNSTSTOFFRÖHREN SENDENHORST GmbH
D-48324 Sendenhorst (DE)**

(72) Erfinder:
• **FUNKE, Hans-Günter
D-48324 Sendenhorst (DE)**
• **FUNKE, Norbert
D-48324 Sendenhorst (DE)**

(74) Vertreter: **Hoffmeister, Helmut, Dr. Dipl.-Phys. Patentanwalt
Goldstrasse 36
48147 Münster (DE)**

(56) Entgegenhaltungen:
**EP-A- 0 479 172        DE-A- 3 446 360
DE-U- 29 514 881     DE-U- 29 601 453
US-A- 3 981 061**

**Beschreibung**

Die Erfindung betrifft ein Anschlußrohr für eine flüssigkeitsdichte Verbindung zwischen einem Kanalrohr, in dessen Wand eine Abzweigöffnung angebracht ist, das aufweist:

- einen Anschlußrohrkörper, in dem wenigstens zwei miteinander beabstandete und umlaufende Dichtungskammern angeordnet sind, in die ein Dichtungselement einbringbar ist, und
- einen Abstandsring, dessen Auflageflansch kompatibel zur Rohraußenfläche des Kanalrohrs ist.

Aus der DE-U-29 601 453 ist ein Anschlußrohr für ein Zuleitungsrohr bekannt. Das Anschlußrohr weist ein Einsteckteil auf, das mit umlaufenden Gummidichtungen versehen ist. Nach dem Einbringen einer Abzweigöffnung in das Kanalrohr wird das Einsteckteil in die Abzweigöffnung hereingesteckt. Die an der Innenwandung des aus Beton bestehenden Kanalrohres andrückenden Enden der Gummidichtungen übernehmen dann die Dichtungsfunktion.

Nachteilig ist, daß ein Abdicht- und Festhalteverhalten des Anschlußrohres in der Abzweigöffnung von der materialtechnischen Elastizität der Gummidichtungen abhängt. Die extreme Rauhigkeit des Betons kann die Dichtigkeit herabsetzen. Im Kanalrohr sich entwickelnde Gase können das Einsteckteil wie einen Korken aus einer Sektflasche treiben.

Eine Verbindung eines Anschlußrohres mit einem Kanalrohr ist aus der DE-U-29 514 881 bekannt. Am Ende des Anschlußrohrs ist eine umlaufende Dichtungskammer angeordnet, in die eine Ringdichtung eingelegt wird. Die Ringdichtung weist eine über die Dichtungskammer reichende Dichtungslippe auf. Mit dieser so ausgebildeten Dichtung voran wird dann das Anschlußrohr durch eine in das Kanalrohr angebrachten Abzweigöffnung vollständig geschoben. Durch ein Hochziehen des Anschlußrohrs ist die dichtschließende Verbindung hergestellt. Ein Spannring, unter den ein Positionsring gelegt ist, sorgt für ein Verspannen des Dichtrings. Eine in das Anschlußrohr angebrachte Nut, in die ein Steg des Positionierrings eingreift, sorgt dafür, daß der Positionierring lagegerecht auf der Kanalrohroberfläche aufliegt.

Ein Verbinden eines Anschlußrohres mit einem Kanalrohr ist aus der DE-A-3 446 360 bekannt. In das Kanalrohr wird eine Öffnung eingebracht. Zur Gewährleistung der Verbindung zwischen dem Kanalrohr und dem Anschlußrohr verfügt das Anschlußrohr über ein Einsatzstück, dessen zum Einsetzen in die Öffnung bestimmtes Ende die Form eines nach außen gerichteten Bundes mit einem Außendurchmesser im wesentlichen gleich dem Durchmesser der Öffnung aufweist. Das andere zur Aufnahme der Abzweigleitung bestimmte Ende hat außen ein Gewinde. Das Anschlußrohr ist mit einem Einsatzstück versehen, dessen Außendurchmesser kleiner als der Außendurchmesser des Bundes und des mit dem Gewinde versehenen Endes ist. Darüber hinaus verfügt das Anschlußrohr über einen Spannring. In eine sich bildende Dichtungskammer wird ein L-förmiger Dichtring eingelegt, der dann mit dem Spannring verspannt wird.

Nachteilig ist, daß das abdichtende Verbinden nur durch ein Verspannen der einzelnen Teile des Außenrohrs zustande kommt. Der Dichtring liegt hierbei auf der Außenfläche des Kanalrohrs auf und ragt in das Innere der Öffnung.

Aus der AT-C-332 815 ist ein Dichtungsring für eine Anschlußverbindung zwischen Kanalschächten und zu diesen senkrechten Rohren bekannt.

Nachteilig ist, daß der Dichtring den Abmessungen der Öffnung des Kanalschachtes entsprechen muß, da er sich auf der Außen- und der Innenfläche des Kanalrohr bei gleichzeitiger Auskleidung der Öffnung auflegt. Durch diese spezielle Gestaltung muß der Dichtring zugleich die Funktion des Einflußrohrs übernehmen.

Aus der EP-A-0 603 775 ist ein Verfahren zum dichtschließenden Verbinden eines Kanalrohrs mit einem Anschlußrohr und ein verspannbares Anschlußrohr hierfür bekannt. Das Anschlußrohr weist an einem Ende eine Dichtungshaltekammer auf, in die eine Ringdichtung eingelegt ist. In das Kanalrohr wird eine Abzweigöffnung eingebracht, in die das Anschlußrohr mit der Dichtungskammer voran eingeschoben wird, und zwar so weit, daß eine eingestülpte Dichtungslippe freigegeben wird. Durch ein Hochziehen und anschließendes Verspannen mit einem Spannring wird das Anschlußrohr abdichtend in der Abzweigöffnung gehalten. Auftretende Druckerhöhungen im Inneren des Kanalrohrs vermögen das so verspannte Anschlußrohr nicht aus der Kanalöffnung zu drücken. Zusätzlich wird über ein Einbringungs-, Lenk- und Verteilungssystem ein Kunststoffschaum eingebracht, der einen durch das Anschlußrohr und die Öffnung gebildeten Raum ausfüllt und ein Schaumstoffdichtungs- und Halterungselement ausbildet. Dieses schützt lediglich die Innenwand der Öffnung und die darin freiliegende Bewehrung und dichtet das Anschlußrohr von außen ab und hält es in der Öffnung nur noch zusätzlich fest.

Aus der EP-A-0 479 172 ist eine Steckmuffenverbindung bekannt, die eine Muffe, ein Spitzende eines Rohres, als Einsteckteil und einen aktivierbaren Dichtungsring aus einem elastomeren Werkstoff aufweist. Durch ein Einpressen von Luft oder eines plastischen oder dauerelastischen Mediums wird der in der Nut des Spitzendes angeordnete Dichtring so aktiviert, daß er einen Restspalt zwischen Muffe und Spitzende überbrückt und somit abdichtet. Vor dem Dichtring ist ein lippenförmiger Vordichtring angeordnet, der Scherbelastungen, die zu einer Überbelastung der Dichtung führen können, aufnimmt.

Einsetzbar ist diese Lösung mit einem sehr hohen Aufwand nur für eine Steckmuffenverbindung. So muß der Dichtring ein der Nutbreite entsprechendes Basisteil, zwei die Nutflächen tangierende Seitenflanken und ein verformbares Frontteil haben, wobei im nichtaktivierten Zustand das Frontteil so gestaltet sein muß, daß die beiden bogenteiligen Randteile höhengleich mit der Spitzendfläche sind, während sich das bogenförmige Innenteil innerhalb der Nut befindet.

Ausgehend von einem Anschlußrohr der eingangs genannten bekannten Art liegt der Erfindung die Aufgabe zugrunde, das Einsetzen in die und insbesondere das Festhalten des Anschlußrohrs in der Abzweigöffnung des Kanalrohrs zu verbessern.

Erfindungsgemäß wird diese Aufgabe durch die Merkmale des Anspruchs 1 gelöst.

Die mit der Erfindung erzielten Vorteile bestehen insbesondere darin, daß das Anschlußrohr wie ein Korken in die vorbereitete Abzweigöffnung des Kanalrohrs eingesteckt werden kann. Der am Anschlußrohr festgelegte Positionierring, dessen Auflageflansch kompatibel zur Rohraußenfläche des Kanalrohrs ist, sorgt dafür, daß der Anschlußrohrkörper lagegerecht aufgesetzt wird. Der Außenring mit dem längsverlaufenden Steg am Anschlußrohrkörper, an dem die Führungsausnehmung des Positionierrings geführt wird, sorgen für die Fixierung und Positionierung des Positionierrings und des Anschlußrohrkörpers untereinander. Hierdurch kommt der umlaufende Dichtungslippenring der Ringdichtung, die in der der Wandungskrümmung des Kanalrohrs folgenden Dichtungskammer einliegt, paß- und lagegerecht gegenüber der Innenfläche der Abzweigöffnung zu liegen. Der abgewinkelt gestaltete Dichtungslippenring erleichtert das Einschieben in die Abzweigöffnung. Ist das Anschlußrohr in die Abzweigöffnung geschoben, setzt der Dichtungslippenring einem Herausziehen einen ersten aktiven Widerstand entgegen. Seine Elastizität sorgt darüber hinaus dafür, daß er flüssigkeitsdicht aufliegt. Darüber hinaus wird das Eindringen des Füllstoffes erleichtert.

Anschließend kommt der flexible Füllstoff zum Einsatz. Dieser Füllstoff braucht nicht extra vorgeformt zu werden. Vielmehr braucht nach dem Einsetzen des Anschlußrohrs die Dichtungskammer anschließend nur mit einem Füllwerkstoff so befüllt zu werden, daß die Spaltkammer zwischen dem Anschlußrohr und der Wandung der Abzweigöffnung dichtschließend überbrückt wird. Durch eine Variierung des Fülldrucks ist es vor allem möglich, im Beton vorhandene Lufthohlräume abdichtend zu verschließen.

Der Anschlußrohrkörper kann in bekannter Weise mehrere beabstandet untereinander umlaufende Dichtungskammern aufweisen. In wenigstens die oberste Dichtungskammer kann der flexible Füllstoff eingefüllt und in wenigstens die unterste eine Ringdichtung mit wenigstens einem die Dichtungskammer überragenden Dichtungslippenring eingelegt werden.

Als Füllstoff kann ein flexibles, sofort andickendes Zweikomponenten-Polyurethanharz eingesetzt werden, das frei von externen Weichmachern und anderen flüchtigen Verbindungen ist. Diese Zusammensetzung gewährleistet es, daß ein solcher Füllstoff der Dichtung gleiche Elastizitätseigenschaften wie Luft verleiht, nicht aber deren Flüchtigkeit besitzt. Dadurch, daß der Füllstoff in einer feststehenden Menge die Spaltkammer ausfüllt, können auftretende materialtechnische Ausdehnungen des Betons und auch des eingesetzten Materials des Anschlußrohres ohne Beeinträchtigung des Dichtungsverhaltens kompensiert werden.

Die Ringdichtung kann aus einem Dichtungskörper bestehen, an den der Dichtungslippenring angeformt ist. An die Ringdichtung können dabei ein oder zwei Dichtungslippenringe angeordnet sein. Sind zwei Dichtungslippenringe angeformt, kann zwischen sie eine umlaufende, im Querschnitt teilkreisförmige ausgebildete Ausnehmung in den Dichtungskörper eingebracht sein. Durch diese spezielle Formgebung wird erreicht, daß der Dichtungsring einen weichen Einschiebevorgang und erhöhte Abdichtungsund Festkrallungseigenschaften zeigt.

Die Dichtungskammern können in einer Kontur um das Anschlußrohr gelegt werden, die folgender Abwicklungsformel entspricht:

$$y = \frac{1}{2}\left(D \cdot \sqrt{D^2 - (d \cdot \sin\alpha)^2}\right).$$

und/oder

$$y = \pi \cdot d$$

mit

α von 0 bis 360° umlaufender Winkel
D lichte Weite eines Kanalrohrs
d lichte Weite eines Anschlußrohres.

Die einfachste Kontur stellt einen umlaufenden Kreis um das Anschlußrohr dar. Einsetzbar ist eine solche Kontur dann, wenn das Kanalrohr eine relativ große Dicke aufweist.

Günstiger als die einfache Kreiskontur ist die meanderförmige Kontur nach der Formel

$$y = \frac{1}{2}\left(D \cdot \sqrt{D^2 - (d \cdot \sin\alpha)^2}\right)$$

Der Vorteil dieser Kontur ist darin begründet, daß ein Hereinragen des Anschlußrohres in den Innenraum des Kanalrohres vermieden wird.

Die Wandungskrümmung wird also letztendlich durch die Formgebung des jeweiligen Kanalrohrs bestimmt. Kommt ein Kanalrohr mit einem runden Querschnitt zum Einsatz, entspricht die Wandungskrümmung dem Rohrdurchmesser des Kanalrohrs. Die Wandungskrümmung kann dabei so gewählt werden, daß sie für Kanalrohre mit unterschiedlichem Rohrdurchmesser eingesetzt werden können. So kann die Wandungskrümmung für ein Rohr mit einem Radius von 50 cm so gewählt werden, daß zugleich Rohre mit einer Nennweite von 40 bis 60 cm mit erfaßt werden.

Um ein Abzweigrohr mit einem Anschlußrohr dichtschliessend verbinden zu können, ist an der Innenfläche des Anschlußrohrkörpers eine ringförmig ausgebildete Anschlußringkammer angebracht, in die eine Anschlußringdichtung eingelegt ist.

An der Innenfläche des Anschlußrohrkörpers kann darüber hinaus ein wenigstens teilweise umlaufender Begrenzungssteg angeordnet sein. Der Begrenzungssteg stellt eine Montagehilfe für das Abzweigrohr dar.

Der Anschlußrohrkörper mit dem umlaufenden Außenring kann einstückig aus Polyvinylchlorid (PVC) hergestellt sein. Auch andere Kunststoffe, z. B. PE, können zum Einsatz kommen. Der Positionierring kann ebenfalls aus Kunststoff hergestellt sein. Es kann aber auch ein Metall, insbesondere ein oberflächenveredeltes Metall zum Einsatz kommen. Hergestellt werden kann darüber hinaus der Positionierring auch aus Beton. Diese Materialien eignen sich besonders gut für die besondere Ausgestaltung, verbunden mit der zu realisierenden Funktion dieses Teils.

Der Anschlußkörper kann als Anschlußrohrvollkörper oder Doppelwandkörper ausgebildet sein. Bei einem Anschlußrohrvollkörper handelt es sich um ein Rohr mit einer Wandstärke von etwa 10 bis 40 mm, vorzugsweise 20 mm.

Die Ausbildung des Anschlußrohrkörpers als Anschlußrohrvollkörper bringt den Vorteil, daß die Dichtungskammern als zwei beabstandet untereinander umlaufende, der Wand krümmung folgende Dichtungsaufnahmenuten eingebracht werden können. Auf der Innenseite kann dann die Anschließringkammer als ringförmige Anschließringnut angeformt sein.

Die Ringdichtungen hingegen und die Anschlußringdichtung sind aus einem weichelastischen Material. Hierbei kommt vorteilhafterweise Gummi zum Einsatz. Aber auch Kunststoff mit einer entsprechenden Weichheit und Härte kann verwendet werden.

Ein Ausführungsbeispiel der Erfindung ist in der Zeichnung dargestellt und wird im folgenden näher beschrieben. Es zeigen:

Fig. 1  ein dichtschließendes Verbinden unter Verwendung von Zweikomponenten-Polyurethanharz als Dichtungselement zwischen einem Kanalrohr und einem Anschlußrohr in einer perspektivischen, teilweise geschnittenen Darstellung;

Fig. 2  einen Schnitt durch eine Verbindung gemäß Fig. 1 entlang der Linie II-II;

Fig. 3  ein Anschlußrohr für eine Verbindung gemäß den Fig. 1 und 2 in einer schematischen Schnittdarstellung;

Fig. 4  eine Ausführungsform einer Ringdichtung für ein Anschlußrohr gemäß Fig. 3 in einer schematischen Schnittdarstellung.

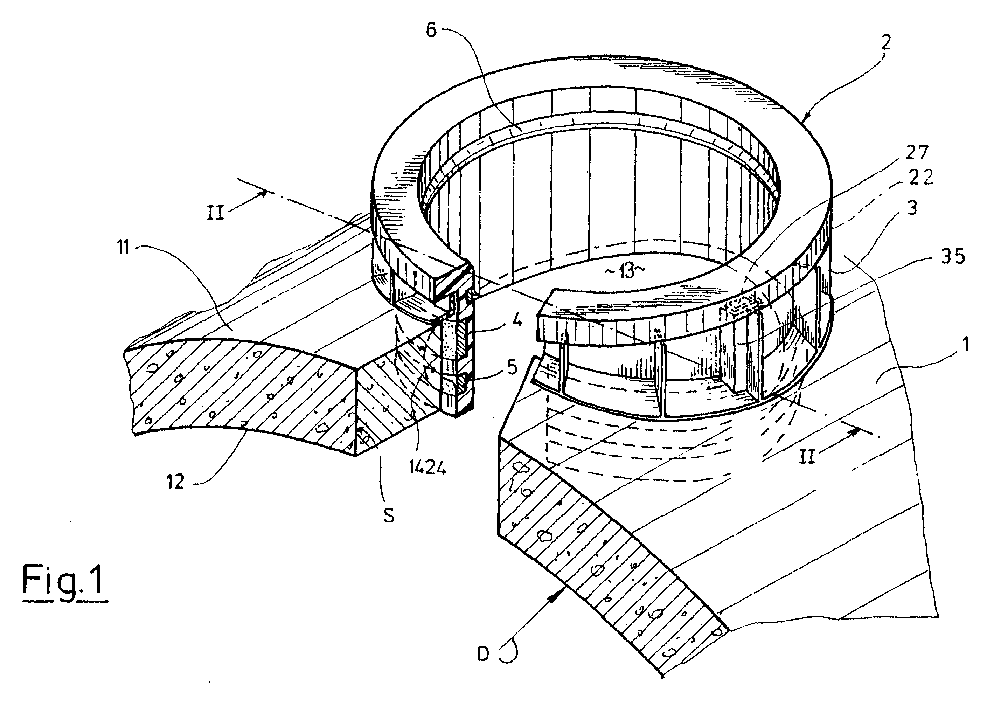

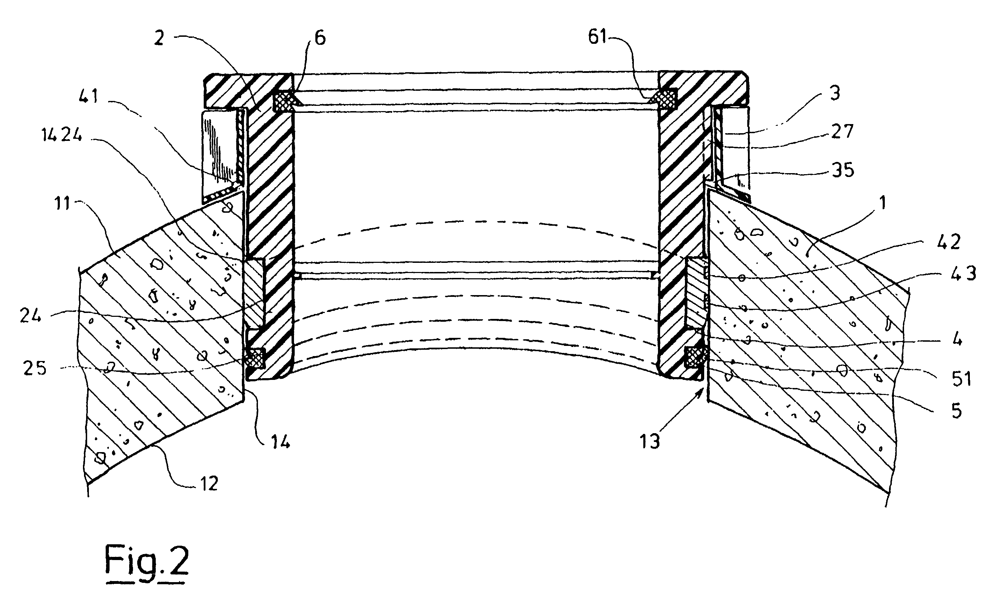

Eine flüssigkeitsdichte Verbindung zwischen einem Anschlußrohr 2 (Stutzen) und einem Betonrohr (1) als Kanalrohr ist in den Fig. 1 und 2 dargestellt.

Gemäß Fig. 1 weist das Betonrohr 1 eine Rohraußenfläche 11 und eine Rohrinnenfläche 12 auf, die untereinander durch eine Wanddicke S beabstandet sind. Das Betonrohr 1 hat wie auch andere Kanalrohre unterschiedliche Radien R, wie nachstehende Übersicht zeigt:

| Nennweite des Betonrohrs 1 in mm | DN300 | DN400 | DN500/600 | DN700/1200 |
| --- | --- | --- | --- | --- |
| Maß R in mm | 220 | 277 | 340 | 610 |

Den Rohrradien R und den lichten Weiten D entspricht eine Wanddicke S, die entsprechend genormt ist.

In ein derartiges Betonrohr 1 wird eine Abzweigöffnung 13 eingebracht. Das Einbringen der Abzweigöffnung 13 erfolgt an der Stelle, an der ein Abzweigrohr von einem Grundstück zum Hauptkanalstrang zu versehen ist. Der Durchmesser der Abzweigöffnung 13 wird durch die Maße des Anschlußrohr 2 bestimmt. Spezielle Bohrgeräte sorgen dafür, daß die Abzweigöffnung 13 eine im wesentlichen glatte Öffnungswandfläche 14 aufweist. Maßgebend für die Oberfläche und die Rauhigkeit ist das Einsatzmaterial Beton. Ist das Betonrohr 1 mit einem Inliner (nicht dargestellt) versehen, ist auch dieser von der Abzweigöffnung 13 durchzogen.

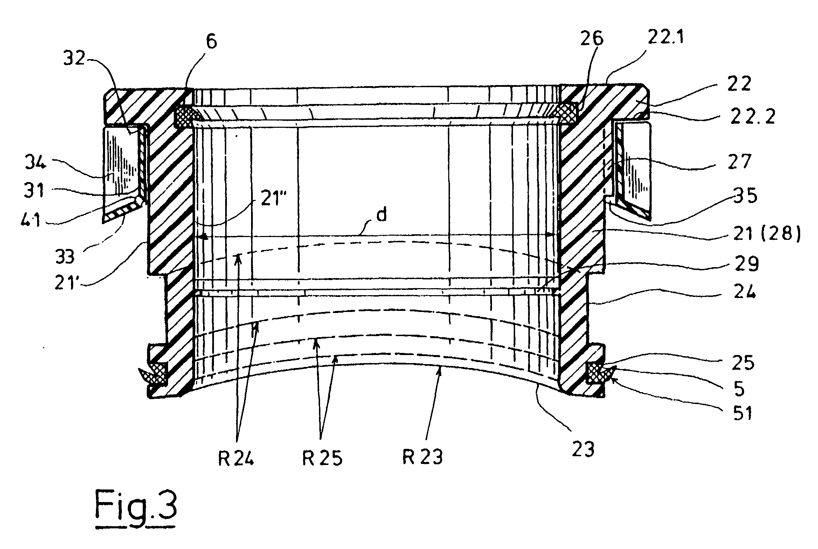

Das Anschlußrohr 2 (Stutzen) für einen Anschluß an ein Kanalrohr 1 gemäß Fig. 1 besteht aus einem Anschlußrohrkörper 21 (vgl. auch Fig. 2 und 3). Der Anschlußrohrkörper 21 kann als Hohl- oder Anschlußrohrvollkörper 28 ausgebildet sein. Einendig ist er mit einem umlaufenden Außenring 22 versehen. Der Anschlußrohrkörper 21 und der daran sich anschließende Außenring 22 sind aus Kunststoff hergestellt.

In der dem Anschlußring 22 gegenüberliegenden Ende weist der Anschlußrohrkörper 21 auf seiner Innenseite 21" einen Begrenzungssteg 29 auf. Auf seiner Außenseite 21' befindet sich eine Dichtungsaufnahmenut 24 und darunterliegend, durch einen Zwischensteg begrenzt, eine weitere Dichtungsaufnahmenut 25. Die Dichtungsaufnahmenuten 24 und 25 sind als Wandungskrümmungen R24 bzw. R25 des Kanalrohres 1 mit einer Wandstärke S folgend ausgebildet. Eine Abflußkrümmungsfläche 23 des Anschlußrohrkörpers 28 weist eine ähnlich verlaufende Wandungskrümmung 23 auf. Würde man den hohlzylinderförmig ausgebildeten Anschlußrohrkörper aufschneiden und abwickeln, würde sie eine Kontur entsprechend der Formel

$$y = \frac{1}{2}\left(D \cdot \sqrt{D^2 - (d \cdot \sin\alpha)^2}\right)$$

und/oder

$$y = \pi \cdot d$$

mit

$\alpha$ von 0 bis 360° umlaufender Winkel
D lichte Weite eines Kanalrohrs
d lichte Weite eines Anschlußrohres.

für die Abwicklung aufweisen. Die Dichtungsaufnahmenuten 24 und 25 und die Abflußkrümmungsfläche 23, die einer Wandungskrümmung R23 folgt, weisen so eine sinusförmige Konfigurationen auf.

In die Dichtungsaufnahmenut 25 ist als umlaufender Dichtungsring eine Ringdichtung 5 eingelegt, an dessen Dichtungskörper sich ein Dichtungslippenring 51 anschließt.

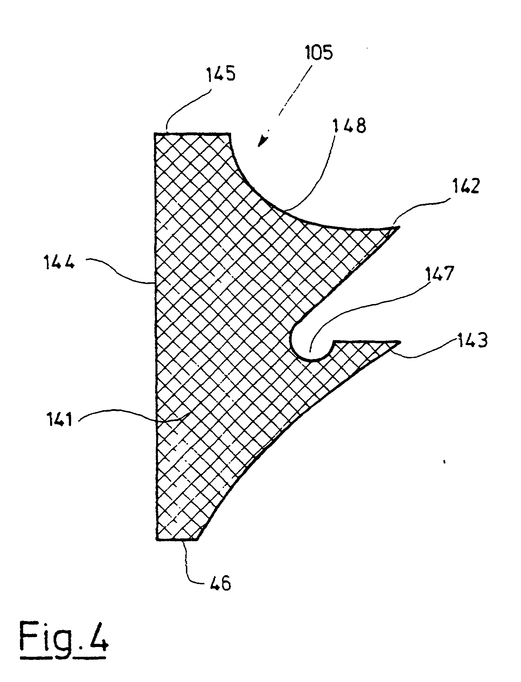

In die Dichtungsaufnahmenut 25 kann als umlaufender Dichtungsring auch eine Ringdichtung 105 eingelegt werden, deren Querschnitt im Detail in Fig. 4 zu sehen ist. Hierbei sind an einem Dichtungskörper 141, der von einer Dichtungskörperinnenfläche 144 und sich gegenüberliegenden Körperaußenflächen 145 und 146 begrenzt ist, zwei Dichtungslippenringe 142 und 143 angeformt. Der Dichtungslippenring 142 ist stupsnasenähnlich geformt. Hierbei geht von der Körperbegrenzungsfläche 145 ein gerundeter Teil in eine Spitze über, der dann abgewinkelt in ein gerades Stück übergeht. Der Dichtungslippenring 143 hingegen verläuft von der Körperbegrenzungsaußenfläche 146 in etwa parallel zur begradeten Fläche des Dichtungslippenrings ebenfalls in eine Spitze nach oben, die aber durch eine im wesentlichen plan liegende Fläche begrenzt wird. Zwischen der Dichtungslippe 142 und der Dichtungslippe 143 ist in den Dichtungskörper 141 eine im Querschnitt teilkreisförmige Ausnehmung 147 eingebracht. Die Ausnehmung 147 und der gerundete Teil 148 erlauben den Dichtungslippenringen 142 und 143 ein entsprechendes Verformen. Die Rundungen sorgen aber dafür, daß die innere Spannkraft des Materials, aus dem die Ringdichtung 105 hergestellt ist, sich voll entfalten kann. Ebenso wie die Ringdichtung 5 ist auch die Ringdichtung 105 aus einem Elastomer, insbesondere einem Gummi hergestellt. Der Abstand zwischen den beiden Spitzen der Dichtungslippenringe 142 und 143 steht im Verhältnis zur Länge der Dichtungskörperinnenfläche 144. Die Länge der Fläche 144 beträgt zwischen 37 bis 48 mm, dementsprechend beträgt der Abstand zwischen den Ringspitzen 142 und 143 8,8 bis 12 mm. Die Breite der Körperbegrenzungsaußenfläche 145, 146 beträgt etwa 5 bis 8 mm. Welche speziellen Ausmaße die Teile der Ringdichtung 105 haben, hängt von den jeweiligen Dimensionen des Stutzens 2 ab. Selbstverständlich können die angegebenen Maße bis zu 90 % darunter und bis zu 90 % darüber liegen.

Wie die Fig. 2 und 3 zeigen, ist auf der Außenfläche 21' des Anschlußrohrvollkörpers 28 ein Steg 27 angebracht. Diesen Steg umgreift eine kompatible Führungsausnehmung 35 eines Positionierrings 3. Mit Hilfe der Führungsausnehmung 35 wird der Positionierring 3 an dessen Außenunterfläche 22.2 fixiert. Der Steg kann auch am Positionierring und die Führungsausnehmung am Körper 28 angebracht sein. Die gegenüberliegende ringförmige Außenringoberfläche 22.1 legt sich dabei schützend vor die einzelnen Teile des Positionierrings 3. Dieser besteht aus einem Ringkörper 31, der in einem Auflageflansch 33 endet. Dieser ist der gewölbten Rohraußenfläche 11 des Betonrohrs 1 angepaßt. Der Ringkörper 31 weist an seiner Außenseite beabstandet Abstützstege 34 auf, die mit dem Auflageflansch verbunden sind und bis zu dessen Abschlußfläche 32 reichen. Hierdurch wird erreicht, daß sich der Positionierring allseitig und gut unter der Außenringunterfläche 22.2 abstützen kann.

An seiner Innenfläche 21" weist der Anschlußrohrvollkörper 28 eine ringförmig umlaufende Anschlußringnut 26 auf, in den eine Anschlußringdichtung 6 eingelegt ist, dessen Dichtungskörper in einen Dichtungslippenring übergeht. In etwa in der Höhe der Dichtungsaufnahmenut 24 ist ein wenigstens teilweise durchgehender ringförmiger Begrenzungssteg 29 angeordnet. Der Begrenzungssteg 29 stellt sich dabei als ein an der Innenfläche 21" angeformten Ring dar. Aus darstellungstechnischen Gründen ist er etwas gekrümmt wiedergegeben.

Die flüssigkeitsdichte Verbindung des so beschriebenen Stutzens 2 mit dem Betonrohr 1 wird wie folgt vorgenommen:

Mit Hilfe seiner Führungsausnehmung 35 wird der Positionierring 3 über den Steg 27 bis unter die Begrenzungsunterfläche 22.2 des Außenrings 22 geschoben. Der Steg 27 ist höchstens so lang wie die Höhe des Ringskörpers 31 hoch ist. Außerdem werden in die vorgesehenen Aufnahmenut 25 sowie die Anschließringnut 26 die Ringdichtung 5 und die Anschließringdichtung 6 eingelegt.

Der so vorbereitete erfindungsgemäße Stutzen 2 wird dann wie ein Korken in die vorbereitete Abzweigöffnung 13 des Betonrohrs 1 geschoben. Beim Einschiebevorgang legen sich die Dichtungslippenringe 142 und 143 bzw. 51 zurück. Das wird bei der Ringdichtung 105 durch den gerundeten Teil 48 und die teilkreisförmige Ausnehmung 47 erleichtert. Beim eingelegten Dichtungsring 5 erleichtert dies die im wesentlichen dreieckförmige Ausnehmung zwischen dem Dichtungslippenring 51 und dem Dichtungskörper. Durch dieses einseitige Verformen geben die Dichtungslippenringe 142, 143 und 51 dem Schubwiderstand optimal nach. Die Rauhigkeit des Betons in der Abzweigöffnung 13 kann so die Lippenringe 141, 142 bzw. den eingeschobenen Lippenring 51 nicht beeinträchtigen. Wesentlich ist, daß der festgelegte Positionierring dafür sorgt, daß der Stutzen lagegerecht eingeschoben wird. Dadurch, daß dessen Auflageflansch 33 kompatibel zur Rohraußenfläche des Betonrohrs ist, kann der Stutzen im eingeschobenen Zustand nur eine Endstellung einnehmen. Durch diese sehr wesentliche Führungsfunktion drücken sich die Dichtungslippenringe 142 und 143 der Ringdichtung 105 und/oder der Dichtungslippenring 51 der Ringdichtung 5 an die Öffnungswandfläche 14 der Abzweigöffnung 13 an.

Das Andrücken der Lippenringe 142, 143 bzw. 51 an der rauhen Öffnungswandfläche 14 führt dazu, daß einem Herausziehen des Stutzens 2 aus der Abzweigöffnung 13 ein hoher Widerstand entgegengesetzt wird. Die Elastizität des Materials, d. h. des eingesetzten Gummis, sorgt für ein flächenhaftes Anlegen des/der Dichtungslippenringe. Der Lippenring 51 wirkt durch das großflächige Anliegen allseitig abdichtend gegenüber der Öffnungswandfläche 14. Ein zusätzlicher Verkrallungseffekt wird außerden herbeigeführt.

Ist der Stutzen 2 endgültig positioniert, wird über die Einfüll-Öffnung 41 die obere Dichtungsaufnahmenut 24 mit einem flexiblen Zweikomponenten-Polyurethanharz 4 befüllt. Das Polyurethanharz 4 füllt dabei jeweils eine zwischen der Dichtungsaufnahmenut 24 bis hin zur Öffnungswandfläche 14 der Abzweigöffnung reichende Spaltkammer 1424 aus. Ist soviel Polyurethanharz 4 eingegeben, daß die Spaltkammer 1424 ausgefüllt ist, kann der Befüllungsvorgang beendet werden. Beim Befüllungsvorgang können sich Andrücknoppen durch ein mehrmaliges Auffüllen ausbilden, die mit 42 und 43 bezeichnet sind und die eine halterungs- und abdichtungserhöhende Wirkung haben.

Wesentlich ist, daß ein flexibles, sofort andickendes Zweikomponenten-Polyurethanharz 4 eingesetzt wird, das frei von Lösungsmitteln, externen Weichmachern und anderen flüchtigen Verbindungen ist. Es verfügt aufgrunddessen über die elastischen Eigenschaften von Luft und die mengenbeständigen Eigenschaften eines Stoffes. Dieser Polyurethanharz 4 verfügt über folgende technischen Daten:

| Reaktionsdaten: | | |
|---|---|---|
| Mischviskosität bei 15°C | Pa·s. | ca. 20 |
| Reaktionszeit bei 25°C | min | 8 - 9 |
| Shore D-Härte | -- | 54 |

| Stoffdaten: | | | |
|---|---|---|---|
| | | Komponente A | Komponente B |
| Dichte bei 15°C Flammpunkt (DIN 51758) | kg/m3 °C | 990 140 | ca. 1170 170 |

(fortgesetzt)

| Stoffdaten: | | | |
|---|---|---|---|
| | | Komponente A | Komponente B |
| Viskosität bei 15°C | mPa·s | 520 ± 100 | 500 ± 100 |

Die Komponente A ist ein Gemisch verschiedener Polyetherpolyole und Additive, die mit der Komponente B zu einem elastischen Polyurethan reagiert. Bei intensiver Durchmischung mit Wasser kann die Mischung teilweise aufschäumen. Durch die hohe Viskosität der Mischung wird Wasser im normalen Gebrauch verdrängt, ohne von der Mischung aufgenommen zu werden. Die Komponente B ist ein Prepolymer auf Basis von 4,4'-Diphenylmethandiisodcyanat mit Additiven.

Bei der Verarbeitung ist die Polyolkomponente gut aufzurühren. Die beiden Komponenten A und B werden im Volumenverhältnis 1 : 1 über eine Zweikomponentenpumpe und Schläuche oder 2-K-Kartuschen oder Koaxialkartuschenzu einem Statikmischer von 5 - 10 mm Durchmesser gefördert, dort miteinander innig vermischt und durch die Einfüll-Öffnung 41 mit einer Leitung in das Innere der Spaltkammer ausgetragen.

Ist also der Einfüllvorgang des Zweikomponenten-Polyurethanharzes 4 beendet, wird die Einfüll-Leitung aus der Einfüll-Öffnung 41 gezogen und die Öffnung 41 kann durch ein Verschlußelement in Gestalt eines Stöpsels oder Ventils abgeschlossen werden. Wesentlich ist, daß sich das befüllte Polyurethharz 4 wie eine Schlauchdichtung zum einem dichtend und zum anderen haltend zwischen dem Stutzen 2 und der Abzweigöffnung 13 verpresst. Ein Herausziehen des Stutzens 2 aus der Abzweigöffnung 13 ist im Gegensatz zu dem vorerst nur einfach eingesteckten Stutzen nun nicht mehr möglich. Darüber hinaus sorgt das Polyurethanharz 4 dafür, daß eine sehr wirksame Dichtung auch gegenüber dem rauhen Beton hergestellt wird. Durch das verwendete Zweikammer-Ringdichtung-Prinzip, bei dem eine Ringdichtung 5 und ein flexibles Zweikomponenten-Polyurethanharz 4 wie eine Schlauchdichtung übereinanderliegen, wird so auf eine einfache und vor allem wirksame Art und Weise eine dauerhafte Dichtigkeit zwischen dem Anschlußrohr 2 und dem Kanalrohr 1 hergestellt.

Ist der Stutzen 2 in der beschriebenen Art und Weise flüssigkeitsdicht mit dem Betonrohr 1 verbunden, wird das Abzweigrohr, das die Verbindung zwischen einem Objekt und dem als Abflußhauptkanal dienenden Betonrohr 1 herstellen soll, in den Stutzen 2 gesteckt. Der umlaufende Begrenzungssteg 29 sorgt dafür, daß das Abzweigrohr sachgerecht installiert wird. Beim Einsteckvorgang des Abzweigrohrs in den Stutzen 2 legt sich die Anschließringdichtung 6 abdichtend um das Abzweigrohr, wobei auch dessen Dichtungslippenring stabilisierende und abdichtende Funktionen übernimmt. Der als Anschlußrohrvollkörper 28 ausgebildete Anschlußrohrkörper 21 ist aufgrund seiner Steifigkeit in der Lage sowohl den Transport als auch die rauhen Bedingungen beim Einsetzen in das Betonrohr 1 aufzunehmen. Seine glatte und durchgehende Außenfläche 21' sorgt darüber hinaus für eine zusätzliche Stabilität in der Abzweigöffnung 13, in dem er sich teilweise an der Öffnungswandfläche 14 abstützt. Die ebenfalls glatte und durchgehende Innenfläche 22" sorgt für eine saubere Führung und vor allem für einen sauberen Halt des Abzweigrohrs. Hierdurch werden Verkantungen der einzelnen Teile der flüssigkeitsdichten Verbindung unterbunden, so daß eine einmal mit einem erfindungsgemäßen Stutzen hergestellte Abzweigung ständig dicht ist. Diese optimale Dichtigkeit wird durch das verwendete Zweikammer-Dichtungsprinzip auf einfache Art und Weise hergestellt und dauerhaft gesichert.

**Patentansprüche**

1.  Anschlußrohr für eine flüssigkeitsdichte Verbindung zwischen einem Kanalrohr (1), in dessen Wand eine Abzweigöffnung (13) angebracht ist, das aufweist

    -  einen Anschlußrohrkörper (21), in dem wenigstens zwei untereinander beabstandete und umlaufende Dichtungskammern (24, 25) angeordnet sind, in die ein Dichtungselement (4, 5) einbringbar ist, wobei der Anschlußrohrkörper (21) einendig in einen wenigstens teilweise umlaufenden Außenring (22) übergeht,
    -  einen Abstandsring (3), dessen Auf läge flansch (33) kompatibel zur Rohraußenfläche (11) des Kanalrohrs (1) ist und als ein Positionierring (3) ausgebildet ist, der am Anschlußrohrkörper durch den Außenring (22), einen am Anschlußrohrkörper (21) angebrachten Steg (27) und eine in den Positionierring (3) dazu kompatibel eingebrachte Führungsausnehmung (35) als Festlegungselemente so festgelegt ist, daß bei dem in die Abzweigöffnung (13) eingeschobenen Anschlußrohrkörper (21) das in der jeweiligen Dichtungskammer angeordnete Dichtungselement (4, 5) lagegerecht gegenüber einer Öffnungswandfläche (14) der Abzweigöffnung (13) positioniert ist,
    -  in wenigstens einer der zur Rohrinnenfläche (12) des Kanalrohrs (1) zeigenden Dichtungskammern (25) als Dichtungselement ist eine Ringdichtung (5; 105) eingelegt, die wenigstens einen, die Außenkontur dieser Dichtungskammer (25) überragenden Dichtungslippenring (51; 142, 143) aufweist,

-    in wenigstens einer weiteren der zur Rohraußenfläche (11) des Kanalrohrs (1) zeigenden Dichtungskammern (24) als Dichtungselement ist ein flexibler Füllstoff (4) so eingefüllt, daß eine von der Dichtungskammer (24) bis hin zur Öffnungswandfläche(14)der Abzweigöffnung (13) reichende Spaltkammer (1424) dichtschließend überbrückt ist, und

-    der Anschlußkörper (21) ist mit dem umlaufenden Außenring (22) einstückig aus Kunststoff hergestellt.

2.   Anschlußrohr nach Anspruch 1, dadurch gekennzeichnet, daß der Füllstoff ein flexibles, sofort andickendes Zweikomponenten-Polyurethanharz (33) ist, das frei von externen Weichmachern und anderen flüchtigen Verbindungen ist.

3.   Anschlußrohr nach Anspruch 1 oder 2, dadurch gekennzeichnet, daß die Ringdichtung (5; 105) aus einem Dichtungskörper (141) besteht, an die der Dichtungslippenring (51; 142, 143) angeformt ist.

4.   Anschlußrohr nach einem der Ansprüche 1 bis 3, dadurch gekennzeichnet, daß an den Dichtungskörper (141) beabstandet untereinander ein erster und ein zweiter Dichtungslippenring (142, 143) angeordnet sind.

5.   Anschlußrohr nach einem der Ansprüche 1 bis 5, dadurch gekennzeichnet, daß zwischen dem ersten und dem zweiten Dichtungslippenring (142, 143) eine umlaufende, im Querschnitt teilkreisförmige Ausnehmung (147) angebracht ist.

6.   Anschlußrohr nach einem der Ansprüche 1 bis 5, dadurch gekennzeichnet, daß die Dichtungskammern (24, 25) einen Konturverlauf haben, der nachstehender Abwicklungsformel entspricht

$$y = \frac{1}{2}\left(D \cdot \sqrt{D^2 - (d \cdot \sin\alpha)^2}\right)$$

und/oder

$$y = \pi \cdot d$$

mit

α von 0 bis 360° umlaufender Winkel
D lichte Weite eines Kanalrohrs
d lichte Weite eines Anschlußrohres.

7.   Anschlußrohr nach einem der Ansprüche 1 bis 6, dadurch gekennzeichnet, daß der Anschlußrohrkörper (21) auf der den Dichtungskammern (24, 25) gegenüberliegenden Innenfläche (21") wenigstens eine ringförmige Anschließringnut (26) aufweist, in die eine Anschlußringdichtung eingelegt ist.

8.   Anschlußrohr nach einem der Ansprüche 1 bis 7, dadurch gekennzeichnet, daß an der Innenfläche (21") des Anschlußrohrkörpers (21) ein wenigstens teilweise umlaufender Begrenzungssteg angeordnet ist.

9.   Anschlußrohr nach einem der Ansprüche 1 bis 8, dadurch gekennzeichnet, daß der Anschlußrohrkörper (21) als Anschlußrohrvollkörper (28) oder Doppelwandkörper ausgebildet ist.

10.  Anschlußrohr nach einem der Ansprüche 1 bis 9, dadurch gekennzeichnet, daß der Positionierring (3) aus Kunststoff, Metall, insbesondere einem oberflächenveredelten Metall oder Beton besteht.

11.  Anschlußrohr nach einem der Ansprüche 1 bis 10, dadurch gekennzeichnet, daß die Ringdichtung (5; 105) und die Anschließringdichtung (6) aus einem weichelastischen Material, insbesondere Gummi sind.

12.  Anschlußrohr nach einem der Ansprüche 1 bis 11, dadurch gekennzeichnet, daß der Kunststoff ein Polyvinylchlorid (PVC) ist.

**Claims**

1.  A connecting pipe for a liquid-tight connection between a sewer pipe (1) formed with a branch opening (13) in its wall and comprising

    -   a connecting pipe member (21) in which at least two spaced-apart peripheral sealing chambers (24, 25) are disposed, into which a sealing element (4, 5) is insertable, wherein one end of the connecting pipe member (21) merges into an at least partly peripheral outer ring (21),

    -   a spacer ring (3) having a bearing surface (33) compatible with the outer surface (11) of the sewer pipe (1) and in the form of a positioning element (3) fixed to the connecting pipe member by fixing elements in the form of the outer ring (22), a web (27) disposed on the connecting pipe member (21) and a guide recess (35) disposed in and compatible with the positioning ring (3), so that when the connecting pipe member (21) is inserted into the branch opening (13), the sealing element (4, 5) disposed in the respective sealing chamber is correctly positioned relative to an opening wall surface (14) of the branch opening (13),

    -   a sealing element in the form of an annular seal (5; 105) is inserted into at least one of the sealing chambers (25), pointing towards the inner surface (12) of the sewer pipe (1), and comprises at least one sealing-lip ring (51; 142, 143) projecting beyond the outer contour of the sealing chamber (25),

    -   a sealing element in the form of a flexible filler (4) is so introduced into at least at least one other sealing chamber (24), pointing towards the outer surface (11) of the sewer pipe (1), that a gap or chamber (1424) extending from the sealing chamber (24) as far as the opening wall surface (14) of the branch opening (13) is sealingly closed and bridged, and

    -   the connecting member (21) is made of plastic integrally with the peripheral outer ring (22).

2.  A connecting pipe according to claim 1, characterised in that the filler is a flexible, immediately thickening two-component polyurethane resin (33) which is free from external plasticisers and other volatile compounds.

3.  A connecting pipe according to claim 1 or 2, characterised in that the annular seal (5; 105) comprises a sealing member (141) on which the sealing lip ring (51; 142, 143) is integrally moulded.

4.  A connecting pipe according to any of claims 1 to 3, characterised in that a spaced-apart first and second sealing lip ring (142, 143) are disposed on the sealing member (141).

5.  A connecting pipe according to any of claims 1 to 5, characterised in that a peripheral recess (147) partly circular in cross-section is disposed between the first and the second sealing lip ring (142, 143).

6.  A connecting pipe according to any of claims 1 to 5, characterised in that the sealing chambers (24, 25) have a contour configuration conforming to the following development formula:

$$y = \tfrac{1}{2}\left( D \cdot \sqrt{D^2 - (d \cdot \sin\alpha)^2} \right)$$

and/or

$$y = \pi \cdot d$$

with

$\alpha$ = an angle rotating from 0 to 360°
D = internal width of a sewer pipe
d = internal width of a connecting pipe.

7.  A connecting pipe according to any of claims 1 to 6, characterised in that the connecting pipe member (21), on its inside (21") opposite the sealing chambers (24, 25), has at least one annular connecting groove (26) into which a connecting ring seal is inserted.

8.  A connecting pipe according to any of claims 1 to 7, characterised in that an at least partly peripheral boundary web is disposed on the inner surface (21") of the connecting pipe member (21).

9.  A connecting pipe according to any of claims 1 to 8, characterised in that the connecting pipe member (21) is constructed as a solid connecting pipe member (28) or a double wall member.

10. A connecting pipe according to any of claims 1 to 9, characterised in that the positioning ring (3) consists of plastic, metal, particularly a surface-finished metal, or concrete.

11. A connecting pipe according to any of claims 1 to 10, characterised in that the ring seal (5; 105) and the connecting ring seal (6) are of a soft elastic material, particularly rubber.

12. A connecting pipe according to any of claims 1 to 11, characterised in that the plastic is a polyvinyl chloride (PVC).


**Revendications**

1.  Tuyau de raccordement, qui est destiné à établir une connexion étanche aux fluides à un tuyau de canalisation (1) comportant dans sa paroi une ouverture de dérivation (13), et qui comporte :

    -   un corps (21) de tuyau de raccordement qui comporte au moins deux chambres d'étanchéité (24, 25) espacées l'une de l'autre et agencées sur toute sa périphérie, dans lesquelles un élément d'étanchéité (4, 5) peut être inséré, le corps (21) du tuyau de raccordement se raccordant à l'une de ses extrémités dans au moins une bague extérieure (22) formée sur au moins une partie de la périphérie,

    -   une bague d'entretoise (3) dont la bride d'appui (33) est compatible avec la surface extérieure (11) de tuyau du tuyau de canalisation (1), et qui est configurée comme bague de positionnement (3) qui est attachée sur le corps du tuyau de raccordement en employant comme éléments d'attache la bague extérieure (22), une nervure (27) montée sur le corps (21) de tuyau de raccordement et un évidement de guidage (35) ménagé dans la bague de positionnement (3) de façon compatible à cet effet, d'une manière telle que

        les éléments d'étanchéité (4, 5) agencés chacun dans l'une des chambres d'étanchéité sont positionnés horizontalement par rapport à une surface (14) de paroi d'ouverture de l'ouverture de dérivation (13) lorsque le corps (21) de tuyau de raccordement est emboîté dans l'ouverture de dérivation (13)

        une bague d'étanchéité (5; 105) qui comporte au moins une bague (51; 142, 143) à lisières d'étanchéité en saillie par rapport au contour extérieur de cette chambre d'étanchéité (25) est insérée comme élément d'étanchéité dans au moins l'une des chambres d'étanchéité (25) tournée vers la surface intérieure (12) de tuyau du tuyau de canalisation (1),

        une matière de rembourrage flexible (4) est bourrée comme élément d'étanchéité dans au moins une autre des chambres d'étanchéité (24) qui est tournée vers la surface extérieure (11) de tuyau du tuyau de canalisation (1) d'une manière telle qu'une chambre (1424) en forme de fente qui s'étend depuis la chambre d'étanchéité (24) jusqu'à la surface (14) de paroi d'ouverture de l'ouverture de dérivation (13) est franchie de façon étanche et

        le corps de raccordement (21) est fabriqué en matière plastique d'un seul tenant avec la bague extérieure (22) formée sur toute la périphérie.

2.  Tuyau de raccordement selon la revendication 1, caractérisé en ce que la matière de bourrage est une résine (33) de polyuréthanne flexible, à prise immédiate à deux composants, qui est exempte de plastifiants externes et d'autres combinaisons volatiles.

3.  Tuyau de raccordement selon la revendication 1 ou 2, caractérisé en ce que la bague d'étanchéité (5; 105) se compose d'un corps d'étanchéité (141) sur lequel la bague (51; 142, 143) à lisières d'étanchéité est conformée.

4.  Tuyau de raccordement selon l'une quelconque des revendications 1 à 3, caractérisé en ce qu'une première et une deuxième bagues (142, 143) à lèvres d'étanchéité sont agencées à distance l'une de l'autre sur le corps d'étanchéité (141).

5.  Tuyau de raccordement selon l'une quelconque des revendications 1 à 4, caractérisé en ce qu'un évidement périphérique (147) à section transversale partiellement circulaire est ménagé entre la première et la deuxième bagues (142, 143) à lèvres d'étanchéité.

6.  Tuyau de raccordement selon l'une quelconque des revendications 1 à 5, caractérisé en ce que le tracé du contour des chambres d'étanchéité (24, 25) correspond à la formule de développement suivante:

$$y = \frac{1}{2}\left(D \cdot \sqrt{D^2 - (d \cdot \sin \alpha)^2}\right)$$

et/ou

$$y = \pi \cdot d$$

où

$\alpha$ est un angle compris entre 0 et 360°

D est la largeur libre d'un tuyau de canalisation

d est la largeur libre d'un tuyau de raccordement

7.  Tuyau de raccordement selon l'une quelconque des revendications 1 à 6, caractérisé en ce que le corps (21) du tuyau de raccordement comporte, sur la surface intérieure (21") opposée aux chambres d'étanchéité (24, 25) au moins une rainure annulaire (26) de bague de raccordement dans laquelle un joint d'étanchéité de bague de raccordement est inséré.

8.  Tuyau de raccordement selon l'une quelconque des revendications 1 à 7, caractérisé en ce qu'une nervure de limitation est agencée sur la surface intérieure (21") du corps (21) de tuyau de raccordement au moins sur une partie de sa périphérie.

9.  Tuyau de raccordement selon l'une quelconque des revendications 1 à 8, caractérisé en ce que le corps (21) de tuyau de raccordement est en forme de corps plein (28) de tuyau de raccordement, ou de corps à double paroi.

10. Tuyau de raccordement selon l'une quelconque des revendications 1 à 9, caractérisé en ce que la bague de positionnement (3) est en matière plastique, en métal, en particulier un métal traité en surface, ou en béton.

11. Tuyau de raccordement selon l'une quelconque des revendications 1 à 10, caractérisé en ce que la bague d'étanchéité (5; 105) et le joint d'étanchéité (6) de bague de raccordement sont en une matière élastique souple, en particulier en caoutchouc.

12. Tuyau de raccordement selon l'une quelconque des revendications 1 à 11, caractérisé en ce que la matière plastique est un chlorure de polyvinyle (PVC).

Fig.1

EP 0 828 964 B1

Fig.2

Fig.3

Fig.4